# EUROPÄISCHE PATENTSCHRIFT

(11) **EP 1 377 804 B1**
(45) Veröffentlichungstag und Bekanntmachung des Hinweises auf die Patenterteilung: **12.10.2005**
(21) Anmeldenummer: 02708344.3
(22) Anmeldetag: 06.03.2002
(51) Int. Cl.: G01K 17/10

(54) **WÄRMEMENGENMESSGERÄT**
CALORIMETER
CALORIMETRE

(30) Priorität: 09.04.2001 CH 668012001
(43) Veröffentlichungstag der Anmeldung: 07.01.2004
(73) Patentinhaber: M & FC Holding LLC, Raleigh, NC 27 615 (US)
(72) Erfinder: SCHÄFER, Burghard, 67112 Mutterstadt (DE)
(74) Vertreter: Patentanwälte Möll und Bitterich
(86) Internationale Anmeldenummer: PCT/EP2002/002410
(87) Internationale Veröffentlichungsnummer: WO 2002/082030

(56) Entgegenhaltungen:
- DE-A- 3 306 529
- DE-A- 19 713 526
- DE-A- 19 820 208
- FR-A- 2 558 954
- US-A- 2 543 588

## Beschreibung

Die Erfindung bezieht sich auf Wärmemengenmessgeräte der im Oberbegriff des Anspruchs 1 genannten Art.

### TECHNISCHES GEBIET

Wärmemengenmessgeräte kommen beispielsweise zur Anwendung, wenn es gilt, die Heizkosten verursachergerecht auf mehrere Benutzer einer Heizungsanlage aufzuteilen, wie dies teilweise auch gesetzlich vorgeschrieben ist.

### STAND DER TECHNIK

Bei Wärmemengenmessgeräten nach dem Prinzip der Durchflussmessung mittels Ultraschall erfolgt die Erfassung der Wärmemenge durch Messung der Strömungsgeschwindigkeit des Mediums mittels Ultraschall und durch Verknüpfung der Daten der Durchflussmenge mit der Temperaturdifferenz zwischen Vorlaufleitung und Rücklaufleitung der Heizungsanlage.

Die Messung der Temperatur in der Vorlaufleitung und in der Rücklaufleitung erfolgt mit Temperaturfühlern, die als Tauchfühler in einem Schutzrohr oder auch als Anlegefühler gestaltet sind.

Aus der DE-A1-197 13 526 ist es bekannt, einen Temperaturfühler direkt in dem gleichen Gehäuse anzuordnen, in dem auch die Ultraschallwandler platziert sind. Dabei ragt ein den Temperaturfühler enthaltendes Schutzrohr in die Messstrecke hinein.

Aus der DE-A1-33 06 529 ist es bekannt, die eine Elektrode des Ultraschallwandlers aus einem Werkstoff herzustellen, dessen Widerstand von der Temperatur abhängig ist, so dass diese Elektrode neben ihrer Funktion als Wandlerelektrode auch noch die Funktion als Temperaturfühler erfüllt. Damit ein genügend hoher Widerstandswert resultiert, soll diese Elektrode eine mäanderförmige Struktur aufweisen. Dies beeinträchtigt aber die Ultraschall-Abstrahlung und hat somit einen negativen Einfluss auf die Genauigkeit der Erfassung der Wärmemenge. Außerdem weisen Wärmemengenmessgeräte regelmäßig zwei Ultraschallwandler auf. Es wäre kaum zweckmäßig, beide Ultraschallwandler so zu gestalten, dass sie gleichzeitig als Temperaturfühler dienen können, da nur der eine wirklich als Temperaturfühler dienen müsste. Werden aber die beiden Ultraschallwandler unterschiedlich gestaltet, so hat dies nachteilige Wirkungen hinsichtlich des Sendens und Empfangens der Ultraschallsignale. Bei Wärmemengenmessgeräten werden regelmäßig zwei Temperatursensoren benötigt, mit denen die Temperaturen in der Vorlaufleitung und in der Rücklaufleitung einer Heizungsanlage erfasst werden. Wird nur der eine Temperatursensor als Wandlerelektrode ausgebildet, so wäre der zweite Temperatursensor nicht gleichartig aufgebaut ist. Um eine genügende Genauigkeit bei der Erfassung der Wärmemenge zu erreichen, werden die Temperatursensoren jedoch in der Regel gepaart, das heißt, speziell ausgesucht und/oder aufeinander abgestimmt. Das ist nach DE-A1-33 06 529 kaum realisierbar.

### DARSTELLUNG DER ERFINDUNG

Der Erfindung liegt die Aufgabe zugrunde, ein Wärmemengenmessgerät zu schaffen, dessen Genauigkeit hinsichtlich der Erfassung der Temperatur des Mediums verbessert ist, ohne dass die Genauigkeit der Erfassung der Wärmemenge negativ beeinflusst ist.

Die genannte Aufgabe wird erfindungsgemäß durch ein Wärmemengersmessgerät mit den Merkmalen des Anspruchs 1 gelöst.

Vorteilhafte Weiterbildungen ergeben sich aus den abhängigen Ansprüchen in Verbindung mit dem Ausführungsbeispiel und den Zeichnungen.

### KURZE BESCHREIBUNG DER ZEICHNUNGEN

Nachfolgend wird ein Ausführungsbeispiel der Erfindung anhand der Zeichnung näher erläutert. Es zeigen:
- Fig. 1: ein Schema eines Wärmemengenmessgeräts und
- Fig. 2: ein Wandlergehäuse in vergrößerter Darstellung.

### WEGE ZUR AUSFÜHRUNG DER ERFINDUNG UND GEWERBLICHE VERWENDBARKEIT

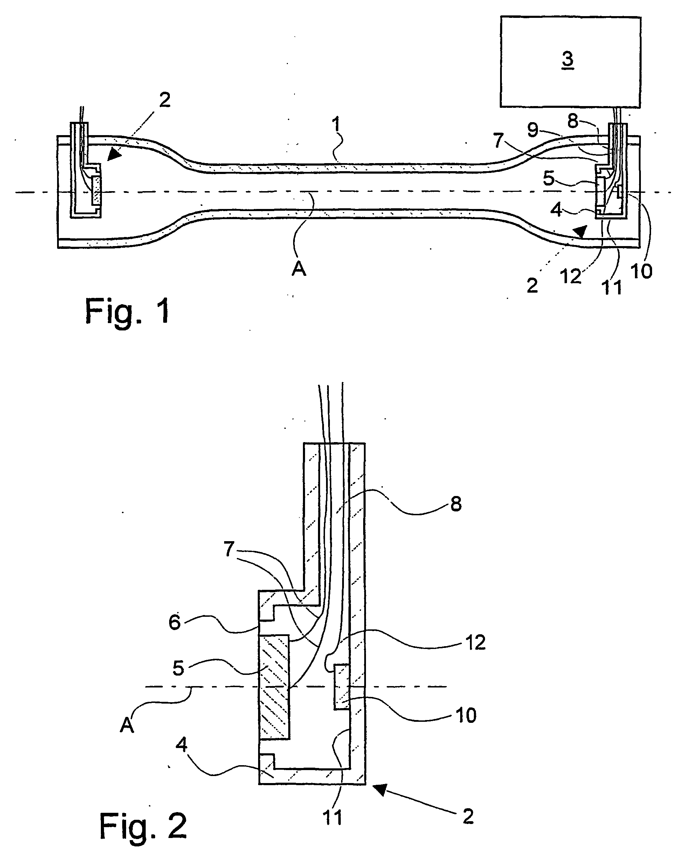

In der Fig. 1 ist ein Messrohr 1 dargestellt, an dessen beiden Enden je ein Ultraschallwandler 2 angeordnet ist. Mittels dieser Ultraschallwandler 2 und eines Messteils 3, an das die Ultraschallwandler 2 angeschlossen sind, erfolgt in bekannter Weise die Erfassung der Strömungsgeschwindigkeit bzw. der Durchflussmenge des Mediums. Die Ultraschallwandler 2 bestehen in bekannter Weise aus einem Wandlergehäuse 4, in dem eine Piezokeramikscheibe 5 angeordnet. Die Piezokeramikscheibe 5 ist beispielsweise auf eine Membran 6 aufgeklebt, mit der das Wandlergehäuse 4 gegen das Medium druckdicht verschlossen ist. Von den bekanntermaßen vorhandenen beiden Elektroden der Piezokeramikscheibe 5 führen Anschlussdrähte 7 durch eine Bohrung 8 in einem Verbindungssteg 9 des Wandlergehäuses 4 zum Messteil 3. Der Verbindungssteg 9, mit dem das Wandlergehäuse 4 innerhalb des Messrohres 1 gehalten ist, behindert die Strömung des Mediums kaum.

Erfindungsgemäß ist in dem einen der Wandlergehäuse 4 zugleich noch ein Temperatursensor 10 angeordnet.

Im Hinblick auf eine bessere Erkennbarkeit sind die Einzelheiten des Wandlergehäuses 4 in der Fig. 2 nochmals vergrößert dargestellt. Der Temperatursensor 10 ist auf der einen Wand 11 im Inneren des Wandlergehäuses 4 befestigt und zwar so, dass er sich etwa im Zentrum der Messrohrachse A des Messrohres 1 befindet. Der Temperatursensor 10 ist wie die Piezokeramikscheibe 5 mittels weiterer Anschlussdrähte 12 an das Messteil 3 angeschlossen. Der Übersichtlichkeit halber ist in den Fig. 1 und 2 nur einer dieser Anschlussdrähte 11 dargestellt.

Das Wandlergehäuse 4 besteht aus einem metallischen Werkstoff, vorzugsweise aus dem gleichen Werkstoff wie das Messrohr 1, beispielsweise aus Chrom-Nickel-Stahl. Da die Wand 11 relativ dünn ist und der Temperatursensor 10 etwa im Zentrum der Messrohrachse A angeordnet ist, repräsentiert der Temperatursensor 10 sehr gut die wahre Temperatur des durchfließenden Mediums. Je höher die Temperatur des Mediums ist, desto mehr Wärme wird über das Messrohr 1 an die Umgebung abgeleitet. Im Zentrum des Messrohrs 1, also auf der Messrohrachse A, ist die Strömungsgeschwindigkeit des Mediums am größten. Die wahre Temperatur des Mediums wird also am besten repräsentiert, wenn die Temperatur etwa auf der Messrohrachse A erfasst wird.

Der Temperatursensor 10, der vorteilhaft ein aus Platin bestehender, auf einem Keramiksubstrat aufgebrachter Schichtwiderstand von 100 oder 500 Ohm ist, ist auf der Wand 11 beispielsweise aufgeklebt.

Es sind Temperatursensoren 10 bekannt geworden, bei denen auf der dem Schichtwiderstand gegenüber liegenden Fläche des Keramiksubstrats eine löt- und schweißbare metallische Schicht aufgebracht ist. Solche Temperatursensoren 10 können auf der Wand 11 aufgelötet oder aufgeschweißt sein. Damit wird der Wärmeübergang vom Medium auf den Temperatursensor 10 im Vergleich zur Klebeverbindung weiter verbessert, was vorteilhaft die Messgenauigkeit weiter erhöht.

Die Anschlussdrähte 12 führen vom Temperatursensor 10 durch die Bohrung 8 des Verbindungsstegs 9 zum Messteil 3. Die Wärmeableitung durch die Anschlussdrähte 12 ist bedeutungslos, so dass die Kontaktierung der Anschlussdrähte 12 im Messteil 3 thermisch nicht belastet ist. Außerdem beeinträchtigen Thermospannungen die Messgenauigkeit nicht.

Auf den Einsatz von Wärmeleitpasten, wie sie bei bekannten herkömmlichen Temperaturfühlern zur Verbesserung der Messgenauigkeit angewendet werden, kann hier verzichtet werden.

Die erfindungsgemäße Lösung ist nicht auf die zuvor beschriebene Bauart der Ultraschallwandler 2 beschränkt. Sie ist auch dann anwendbar, wenn die Piezokeramikscheibe 5 in anderer Weise im Wandlergehäuse 4 angeordnet ist. Wesentlich ist, dass das Wandlergehäuse 4 vom Medium umströmt wird. Beim zuvor geschilderten Ausführungsbeispiel ergibt sich aus der Fig. 1, dass das Messrohr 1 an seinen beiden Enden, in denen die Wandlergehäuse 4 angeordnet sind, erweitert ist, wie dies schon bekannt ist. Die Erfindung ist nicht auf diese Ausführung des Messrohres 1 beschränkt.

Die erfindungsgemäße Lösung hat auch erhebliche Kostenvorteile, weil ein dem Wärmemengenmessgerät unmittelbar zugeordneter separater Temperaturfühler mit einem Schutzrohr nicht erforderlich ist. Lediglich der zweite Temperaturfühler ist dann noch als separates Bauelement nötig.

Vorteilhaft gegenüber DE-A1-33 06 529 ist es auch, dass die Herstellung vereinfacht ist. Die Wandlerelektroden können einfacher hergestellt werden und als Temperaturfühler können handelsübliche Temperatursensoren angewendet werden.

## Patentansprüche

1. Wärmemengenmessgerät mit zwei in einem Messrohr (1) angeordneten Ultraschallwandlern (2) zur Messung von Strömungsgeschwindigkeit und/oder Durchflussmenge eines Mediums und zwei Temperaturfühlern zur Messung der Temperatur des Mediums in einer Vorlaufleitung und einer Rücklaufleitung, wobei die Messwerte in einem Messteil (3) verarbeitbar sind, **dadurch gekennzeichnet, dass** einer der Temperaturfühler gebildet wird von einem Temperatursensor (10), der innerhalb eines Wandlergehäuses (4) des einen Ultraschallwandlers (2) an einer Wand (11) des Wandlergehäuses (4) angeordnet ist.

2. Wärmemengenmessgerät nach Anspruch 1, **dadurch gekennzeichnet, dass** der Temperatursensor (10) etwa im Zentrum der Messrohrachse A des Messrohres (1) angeordnet ist.

3. Wärmemengenmessgerät nach Anspruch 2, **dadurch gekennzeichnet, dass** der Temperatursensor (10) ein auf einem Keramiksubstrat angeordneter Schichtwiderstand ist, der auf der Wand (11) des Wandlergehäuses (4) aufgeklebt ist.

4. Wärmemengenmessgerät nach Anspruch 2, **dadurch gekennzeichnet, dass** der Temperatursensor (10) ein auf einem Keramiksubstrat angeordneter Schichtwiderstand ist, wobei das Keramiksubstrat auf der dem Schichtwiderstand gegenüber liegenden Fläche eine löt- und schweißbare Schicht aufweist, die auf der Wand (11) des Wandlergehäuses (4) aufgelötet oder aufgeschweißt ist.

## Claims

1. Calorimeter with two ultrasonic transducers (2), disposed in a measuring tube (1), for measuring the flow velocity and/or the flow volume of a medium and two temperature probes for measuring the temperature of the medium in a flow pipe and a return pipe, wherein the measured values can be processed in a measuring part (3), **characterised in that** one of the temperature probes is formed by a temperature sensor (10) which is disposed inside a transducer housing (4) of one ultrasonic transducer (2) at a wall (11) of the transducer housing (4).

2. Calorimeter according to Claim 1, **characterised in that** the temperature sensor (10) is disposed approximately at the centre of the measuring tube axis A of the measuring tube (1).

3. Calorimeter according to Claim 2, **characterised in that** the temperature sensor (10) is a film resistor which is disposed on a ceramic substrate and is stuck to the wall (11) of the transducer housing (4).

4. Calorimeter according to Claim 2, **characterised in that** the temperature sensor (10) is a film resistor which is disposed on a ceramic substrate, wherein the ceramic substrate comprises a solderable and weldable layer on the surface which lies opposite the film resistor, which layer is soldered or welded to the wall (11) of the transducer housing (4).

## Revendications

1. Calorimètre comportant deux transducteurs ultrasonores (2) disposés dans un tube jaugeur (1) pour la mesure de la vitesse d'écoulement et/ou du débit d'un fluide et deux sondes thermiques pour la mesure de la température du fluide dans une conduite d'aller et une conduite de retour, les valeurs de mesure pouvant être traitées dans une partie de jaugeage (3), **caractérisé en ce que** l'une des sondes thermiques est formée d'un capteur de température (10) qui est disposé à l'intérieur d'un boîtier de transducteur (4) du transducteur ultrasonore (2) sur une paroi (11) du boîtier de transducteur (4).

2. Calorimètre selon la revendication 1, **caractérisé en ce que** le capteur de température (10) est disposé approximativement au centre de l'axe A du tube jaugeur (1).

3. Calorimètre selon la revendication 2, **caractérisé en ce que** le capteur de température (10) est une résistance à couche disposée sur un substrat en céramique, laquelle résistance est collée sur la paroi (11) du boîtier de transducteur (4).

4. Calorimètre selon la revendication 2, **caractérisé en ce que** le capteur de température (10) est une résistance à couche disposée sur un substrat en céramique, le substrat en céramique comportant, sur la surface faisant face à la résistance à couche, une couche pouvant être brasée et soudée qui est brasée ou soudée sur la paroi (11) du boîtier de transducteur (4).
